Europäisches Patentamt

European Patent Office

Office européen des brevets

(19)

(11) **EP 1 383 289 A1**

(12) **EUROPEAN PATENT APPLICATION**

(43) Date of publication:
**21.01.2004 Bulletin 2004/04**

(51) Int Cl.7: **H04L 25/03**

(21) Application number: **02255034.7**

(22) Date of filing: **17.07.2002**

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(71) Applicant: **Telefonaktiebolaget L M Ericsson
(Publ)
126 25 Stockholm (SE)**

(72) Inventor: **He, Shousheng
247 35 Södra Sandby (SE)**

(74) Representative: **Clarke, Alison Clare
Haseltine Lake,
Imperial House, 15-19 Kingsway
London WC2B 6UD (GB)**

(54) **Noise whitening**

(57)    A method of noise whitening comprises estimating (201) the noise of a channel; calculating (202) the power spectrum of the channel; adding (203) the estimated noise and the calculated power spectrum to build (204) a positive definite band matrix; applying (205) symmetric factorisation to the matrix; deriving (206) the spectral factorisation of the channel from the symmetric factorisation; approximating (207) the spectral factorisation; calculating (208) the noise whitening prefilter settings from the derived spectral factorisation and the estimated noise of the channel; and prefiltering the received signal to noise whiten the signal.

Estimating the Noise
of a Channel
ρ
201

Calculating the Power
Spectrum of the Channel
p
202

Adding the Estimated Noise
and Power Spectrum
s
203

Building a Definite Band
Toeplitz Matrix
A
204

Applying Symmetric
Factorisation (Cholesky)
205

Deriving Spectral
Factorisation
206

Approximation of the
Spectral Factorisation
207

Calculating Noise
Whitening
208

Fig. 2

**Description**

**TECHNICAL FIELD**

The present invention relates to a method of noise whitening a received signal. In particular, but not exclusively, it relates to a method for setting a prefilter for an equalizer of a demodulator in a wireless communication system with noise whitening to suppress co-channel and adjacent channel interference.

**BACKGROUND OF THE INVENTION**

In wireless digital TDMA communication systems, such as GSM, EDGE and D-AMPS, data is transmitted in the form of bursts, the bursts comprising a plurality of symbols. The symbols may be altered or distorted during transmission by various factors such as bandwidth-limited modulation and co-channel and adjacent channel interference which occur during multipath signal propagation. This distortion is referred to as the Inter Symbol Interference (ISI). Therefore, it is desirable that the demodulator of a receiver of such a communication system can compensate for ISI. Equalizers are used extensively for this purpose.

The performance of wireless TDMA systems is also limited by interferences from other users in the same system. Users in a neighbouring cell transmitting at the same carrier frequency create co-channel interferences (CCI) while users transmitting at adjacent carrier frequency create Adjacent Channel Interferences (ACI). Unlike background noise, these interferences pose as "colored" noise.

When a wireless link, such as in GPRS/EGPRS, is used for a data transmission, higher equalizer performance is required, since data transmission is much more error sensitive than voice transmission. To avoid information loss, a wider receiver filter (a Nyquist filter) can be used, and at the same time suppress both co-channel and adjacent channel interferences by whitening the noise. Noise whitening therefore greatly enhances the performance of equalizers.

In practice, noise whitening is accomplished together with a prefilter; otherwise the composite channel will be much longer than the propagation channel, resulting in significant performance degradation. The prefilter, also known as a WFM (a Whitened Matched Filter), FFF (a FeedForward Filter) or precursor equalizer is fundamental to the performance of most widely used equalizers, such as MLSE (Maximum-Likelihood Sequence Equalizer), DFE (Decision Feedback Equalizer) and DFSE (Decision Feedback Sequence Equalizer). The role of the prefilter is to equalize precursor ISI (ISI from future symbols), convert a non-minimum phase channel into a minimum-phase one, compact the energy of the delay spread symbol as much as possible to the first few taps to increase the effective decision point SNR (Signal to Noise Ratio) for the equalizer.

For non-minimum phase channels, a prefilter is non-causal and infinite in length. In reality, the prefilter is always approximated with a finite length n-tap FIR (Finite Impulse Response) filter. To get satisfactory performance, n must be significantly longer than the length of channel impulse response $m$, i.e. $n \gg m$. As a rule of thumb, the length of the prefilter can be chosen as

$$n = 2m + 3$$

Noise whitening, prefilter setting and updating represents a significant, and often dominate portion of the equalizer complexity.

There are two approaches to noise whitening, namely explicit and implicit. In the explicit approach a dedicated filter $w$ is calculated from the noise estimate by solving the following

$$Rw = \rho$$

where $\rho$ is an estimate of the noise auto-correlation and $R$ is a Toeplitz matrix of the estimate. The drawback of the explicit whitening is that the order of the whitening filter must be very low to keep the length of the composite channel short. This has limited the modelling capability and performance of this approach. In addition, a separated prefilter is still necessary, which further increases the complexity in the signal processing of the received signal.

In the implicit approach, the whitening is done in prefilter setting. There are two approaches to prefilter setting: MMSE (Minimum Mean Square Error) and ZF (Zero-Forcing, a.k.a. Minimum Phase or All-Pass filter). The MMSE approach includes numerous matrix operations, including multiplication; factorisation and inversion which have to be applied to matrices of size $(n+m) \times (n+m)$, for example the noise whitening prefilter settings are derived as follows:

$$f= d_{n-1} \text{ u*L}^{-1} \text{ H* R}^{-1}$$

where $d_{n-1}$ is the (n-1)th element of a diagonal matrix; **L** is the low triangle matrix; **H** is an $(n+m)\times(n)$ channel matrix; and **R** is a $(n\times m)$ noise correlation matrix. The triangular **L$^{-1}$** is obtained by a symmetrical factorisation as follows:

$$X\text{+H*R}^{-1} \text{ H=LDL*}$$

where $X$ is the data correlation matrix of size $(n+m)\times(n+m)$ and **H** and **R** have dimension $(n+m)\times n$ and n×n respectively, (•)* denotes conjugate transposition. **LDL*** are the lower triangle **L,** diagonal **D** and upper triangle **L*** of the symmetric factorisation of the Toeplitz matrix. An example of noise whitening prefilter design by spectral factorisation is disclosed by WO 02/33923.

Known methods in ZF approach, not comprising noise whitening, includes Root Searching via Newton Raphson iterations and Spectral Factorization via Iterative Backsubstitution (SFIB). Some numerical difficulties have been accounted in the root searching method when it is implemented in fixed-point arithmetic operations, partially due to the rounding errors in the deflation process. Spectral factorisation is a classical problem in control theory, where considerable efforts have been made for its solution. However, almost all the proposed algorithms are targeted on reducing the asymptotic complexity, where a solution with $O(m^2)$ operations, where $O(x)$ is the asymptotic prepositional to $x$, is considered good, regardless of the constant factor (for example the number of iterations). For SFIB method, an experimental iteration of 20 is considered sufficient in an EDGE equaliser. Beside computational complexity, another drawback of SFIB is that a final scaling is always necessary since the result of the iteration oscillates between two sets of initiation-dependant values.

The MMSE approach, which often includes noise whitening, is computationally expensive since numerous matrix operations, including multiplication, factorisation and inversion have to be applied. The classical MMSE approach is disclosed, for example, in N. Al-Dhahir and J.M. Cioffi "MMSE Decision-Feedback Equalizers: Finite-Length Results", IEEE Trans. on Information Theory, vol.41, no.4, July 1995.

## SUMMARY OF THE INVENTION

The object of the present invention is to provide a method for noise whitening suitable for prefilter setting in which the noise whitening computation is simplified to reduce the complexity of the equalizer and hence reduce the memory requirements and power consumption of such equalizers. This is, for example, accomplished via a simple polynomial operation of noise autocorrelation on the prefilter, which is in turn obtained by a computationally efficient band symmetrical factorisation. The simplicity of the method of the present invention is particularly advantageous for upgrading existing GSM equalizers.

The noise whitening method of the present invention in prefilter setting via a band symmetric factorisation provides an approximation of the spectral factorisation that is especially suitable for equalizer application in digital communication systems.

According to an aspect of the present invention, there is provided a method of noise whitening a received signal, the method comprising the steps of: estimating the noise of a channel; calculating the power spectrum of the channel; adding the estimated noise and the calculated power spectrum to build a positive definite band matrix; applying symmetric factorisation to the matrix; deriving the spectral factorisation of the channel from the symmetric factorisation; approximating the spectral factorisation; calculating the settings for a noise whitening prefilter from the approximated spectral factorisation and the estimated noise of the channel; and prefiltering the received signal to noise whiten the signal.

The effectiveness of the present invention is partially due to the combination of approximation of the spectral factorisation and the noise of a channel. This enables the positive definite band matrix to be generally small, thus improving the computational efficiency of the noise whitening.

The power spectrum may be calculated by autocorrelation and the symmetric factorisation may be square-root-less Cholesky factorisation. The spectral factorisation can be approximated by reversing the non-zero elements of the last row of the decomposed lower triangle of the matrix.

The method of the present invention is particularly suitable for generating the settings for a prefilter of an equalizer.

The accuracy of the approximation can be adjusted by the size of the band matrix. The present invention provides a noise whitening approach through direct polynomial division of the estimate of the noise auto-correlation by the prefilter setting which is obtained from an approximation of channel spectral factorisation.

## BRIEF DESCRIPTION OF DRAWINGS

Figure 1 is a simplified block diagram of a Decision Feedback Sequence Equalizer (DFSE) of a preferred embodiment of the present invention;
Figure 2 is a flow chart illustrating the method of the preferred embodiment of the present invention; and
Figure 3 is a graph illustrating the performance of an equalizer having a prefilter of the preferred embodiment of the present invention.

## DETAILED DESCRIPTION OF PREFERRED EMBODIMENTS

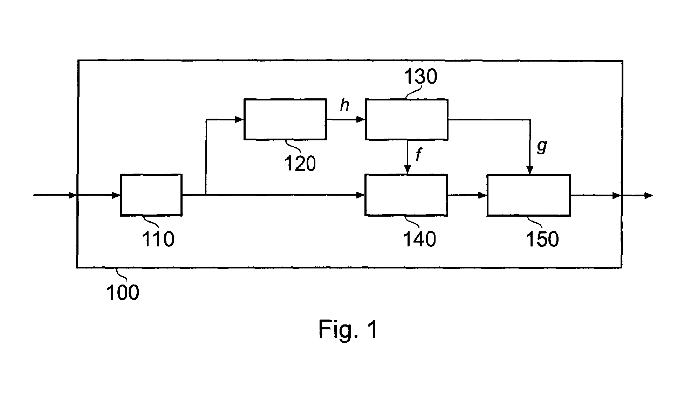

A preferred embodiment of the present invention will now be described with reference to Figure 1. In a mobile communication system, a transmission sent in bursts, for example GSM, is received and the transmission is demodulated at the receiver. The demodulator includes a DFSE equalizer 100 as shown in Figure 1. Although a DFSE equalizer is illustrated here, it is understood that any equivalent type of equalizer may be utilised.

The equalizer 100 comprises a burst synchroniser 110. The input of the burst synchroniser 110 is connected to the input of the equalizer 100. The output of the burst synchroniser 110 is connected to the input of an m-tap channel estimator 120 and connected to the input of a whitening prefilter 140. The setting of the whitening filter 140 is controlled by a prefilter setting means 130. The output of the whitening prefilter 140 is connected to the input of a sequence estimator 150. The output of the sequence estimator 150 is connected to the output of the equalizer 100.

Operation of the equalizer will now be described. The equalizer generates estimated symbols from the transmitted symbols of the received signal which may have become distorted during transmission. The transmitted symbols may have been distorted by a number of factors, for example the symbols may have altered by the components (filters) of the transmitter of the communication system, distortion from the multipath channel during transmission to the receiver or the components of the receiver, for example the down conversion and analogue to digital conversion of the received signal. The transmission may be also corrupted by background noise and strong interference from other users in the system, such as CCI and ACI.

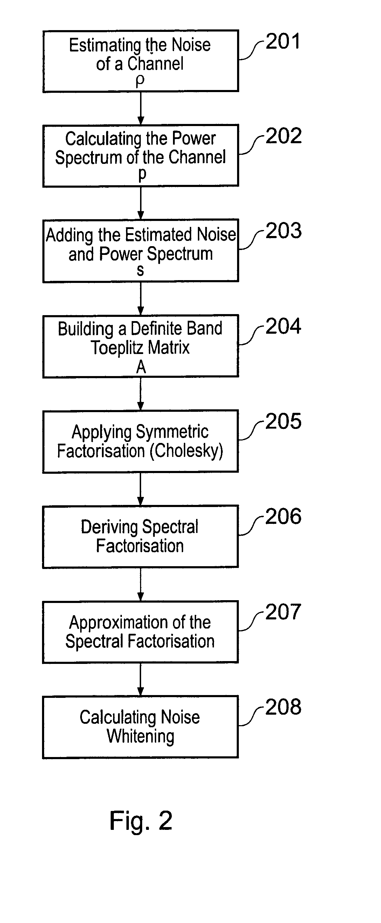

The received transmission bursts are synchronised and forwarded to the m-tap channel estimator 120 and the whitening prefilter 140. The m-tap estimator 120 generates an m-tap channel estimate **h**. The m-tap estimate **h** is provided to the prefilter setting means 130. The prefilter setting means 130 computes the noise whitening in accordance with the method of the present invention as described in more detail below with reference to Figure 2. The noise whitening **f** is then utilised to set the whitening prefilter 140.

The burst synchroniser 110 synchronises the received transmission bursts to be filtered by the whitening prefilter 140 once the prefilter has been set. The prefiltered burst is then provided on the input of a sequence estimator 150 which is also provided with an approximation of the channel spectral factorisation **g**. The sequence estimator 150 generates an estimate of the distorted symbols within the received transmission bursts on the output of the equalizer.

The method of noise whitening according to a preferred embodiment of the present invention will now be described with reference to Figure 2.

In accordance with the method of the preferred embodiment of the present invention, the noise power spectrum $\rho$ of a channel is estimated, step 201. The power spectrum $p$ of the channel is also calculated, step 202. When an $m$-tap channel estimate $h$ is available, the power spectrum of the channel can be calculated simply by autocorrelation.

$$p_i = \sum_{j=0}^{m-1-i} h_j * h_{j+i} \qquad \mathrm{i \ = \ 0, \ ..., \ m-1}$$

The estimated noise contribution is added to the power spectrum, step 203,

$$s = p + \rho$$

**s** is used to build a positive definite band Toeplitz matrix of size $k \times k, k \geq m$, step 204,

$$\mathbf{A} = \begin{bmatrix} s_0 & s_1^* & \cdots & s_{m-1}^* & 0 & \cdots & 0 \\ s_1 & s_0 & \cdots & s_{m-2}^* & s_{m-1}^* & 0 & \cdots \\ \cdots & \cdots & \cdots & \cdots & \cdots & \cdots & 0 \\ s_{m-1} & s_{m-2} & & s_0 & \cdots & \cdots & s_{m-1}^* \\ 0 & \cdots & \cdots & \cdots & \cdots & \cdots & s_{m-2}^* \\ \cdots & 0 & s_{m-1} & \cdots & \cdots & s_0 & \cdots \\ 0 & \cdots & 0 & s_{m-1} & \cdots & \cdots & s_0 \end{bmatrix}$$

A symmetric factorisation (a.k.a square-root-less Cholesky factorisation) is then applied, step 205,

$$A = LDL^*$$

The spectral factorisation can then be approximated by reversing the non-zero elements of the factored low triangle **L**, step 207.

$$g = flip(L(k\text{-}1, k\text{-}m : k\text{-}1))$$

The root accuracy of the approximation is affected by the dimension of the matrix **A**. The approximation of the spectral factorisation is such that g is minimum phase (i.e. all its roots are within the unit circle in a complex plain) with correct scaling.

Implicit noise whitening according to the preferred embodiment of the present invention is formulated by a direct polynomial division, step 208.

$$f = \left.\left(\frac{h}{g}\right)^*\middle/\rho\right.$$

The result is stable since both channel spectral factor $g$ and the autocorrelation of the noise estimate $\rho$, which can be obtained in channel estimation stage, are causal and invertible. Furthermore, due to the method of calculation of both $g$ and $\rho$ in accordance with the present invention, the band Toeplitz matrix **A** need not be too big, for example, $k = m+1$ will often be sufficient.

Therefore, computational efficiency is greatly improved. It is more than an order of magnitude simpler than the classical MMSE approach. Furthermore, compared to the explicit whitening approach, the computational efficiency advantage is due to several factors. First, no explicit whitening filter needs to be calculated, which saves computation in both solving $Rw = \rho$ and processing the receiver signal. Second, for all channel conditions in e.g. GSM/EDGE systems, channel spans only 4-8 symbols. Thus, the spectral factorisation via **A=LDL\*** requires much less operations than the SFIB approach.

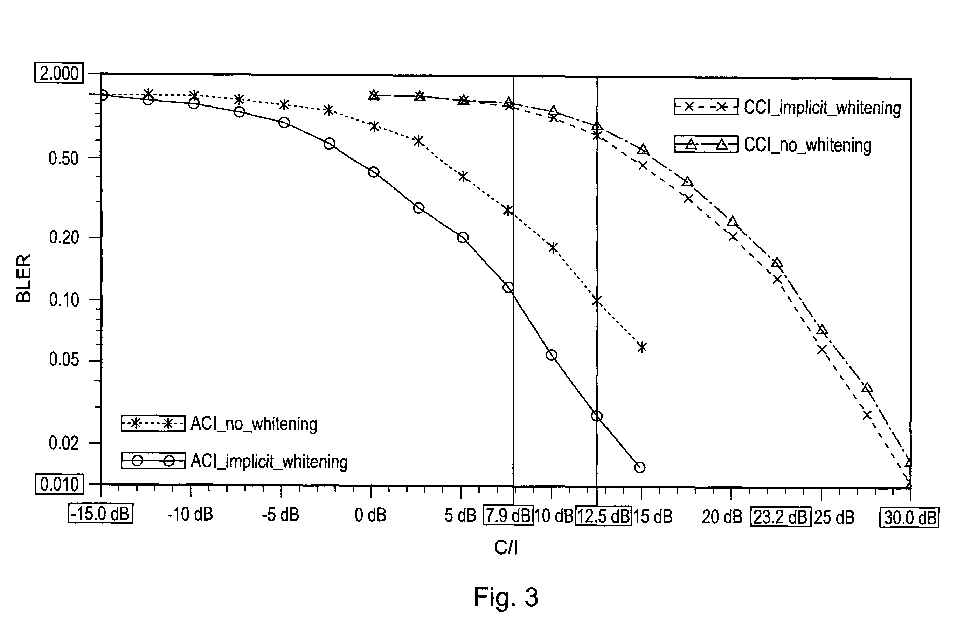

Figure 3 illustrates a graph of the performance of an equalizer including the noise whitening prefilter whose settings are derived according to the method set out above. A comparison is made of the block error rate (BLER) and channel interference C/I for two interference environment, namely co-channel interference (CCI) and adjacent channel interference (ACI) using an MCS9, ratio-1 coding scheme in TU3, typical urban, 900MHz with no frequency hopping system. As illustrated in Figure 3 in a CCI environment, a 1dB gain is achieved by a noise whitening prefilter set by the method of the present invention and, in the ACI environment, a 5dB gain is achieved by use of a noise whitening prefilter set by the method of the present invention.

Although a preferred embodiment of the method of the present invention has been illustrated in the accompanying drawing and described in the forgoing detailed description, it will be understood that the invention is not limited to the embodiment disclosed, but is capable of numerous variations, modifications without departing from the scope of the invention as set out in the following claims.

**Claims**

1. A method of noise whitening a received signal, the method comprising the steps of:

   estimating the noise of a channel;
   calculating the power spectrum of the channel;
   adding the estimated noise and the calculated power spectrum to build a positive definite band matrix;
   applying symmetric factorisation to the matrix;
   deriving the spectral factorisation of the channel from the symmetric factorisation;
   approximating the spectral factorisation;
   calculating the noise whitening prefilter settings from the approximated spectral factorisation and the estimated noise of the channel; and
   prefiltering the received signal to noise whiten the signal.

2. A method according to claim 1, wherein the step of calculating the noise whitening prefilter settings comprises direct polynomial division of the approximated spectral factorisation and the estimated noise of the channel.

3. A method according to claim 1 or 2, wherein the power spectrum is calculated by autocorrelation.

4. A method according to any one of claims 1 to 3, wherein the symmetric factorisation is square-root-less Cholesky factorisation.

5. A method according to any one of claims 1 to 4, wherein the spectral factorisation is approximated by reversing the non-zero elements of the last row of the decomposed lower triangle of the matrix.

6. A method according to claim any one of claims 1 to 5, wherein the band symmetric factorisation comprises a Toeplitz matrix.

7. A method for setting a prefilter of an equalizer comprising calculating the noise whitening prefilter settings according the method of any one of claims 1 to 6.

8. A prefilter for an equalizer having noise whitening settings derived by the steps of:

   estimating the noise of a channel;
   calculating the power spectrum of the channel;
   adding the estimated noise and the calculated power spectrum to build a positive definite band matrix;
   applying symmetric factorisation to the matrix;
   deriving the spectral factorisation of the channel from the symmetric factorisation;
   approximating the spectral factorisation; and
   calculating the noise whitening prefilter settings from the approximated spectral factorisation and the estimated noise of the channel.

9. An equalizer for a demodulator of a wireless communication system comprising a prefilter according to claim 8.

10. A device for demodulating a signal transmitted via a channel comprising:

    a channel estimator for generating a channel estimate for said channel;
    prefilter setting means for deriving noise whitening settings for a prefilter by the method according to any one of claims 1 to 6;
    a prefilter, set according to the settings derived by the prefilter setting means, for noise whitening said signal; and
    a sequence estimator for estimating any distortion caused during transmission of said noise whitened signal.

Fig. 1

Estimating the Noise
of a Channel
ρ
201

Calculating the Power
Spectrum of the Channel
p
202

Adding the Estimated Noise
and Power Spectrum
s
203

Building a Definite Band
Toeplitz Matrix
A
204

Applying Symmetric
Factorisation (Cholesky)
205

Deriving Spectral
Factorisation
206

Approximation of the
Spectral Factorisation
207

Calculating Noise
Whitening
208

Fig. 2

Fig. 3

European Patent Office

# EUROPEAN SEARCH REPORT

Application Number

EP 02 25 5034

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | YIN-TSUNG HWANG, JIH-CHENG HAN: "A novel FPGA design of a wireless block transmission channel equalizer" IEEE ASIA PACIFIC CONFERENCE ON ASICS , 28 - 30 August 2000, pages 119-122, XP002221821 Piscataway, US * equation 4 * * page 120, right-hand column, paragraph 3 * | 1-10 | H04L25/03 |
| X L | WO 01 39448 A (ERICSSON) 31 May 2001 (2001-05-31) raises doubts about the validity of the claimed priority  * figure 5 * * page 13, line 14 - line 16 * * page 11, line 11 - line 21 * * page 17, line 3 - line 6 * | 1-10 | |
| X | LEI WEI, RASMUSSEN: "A near ideal noise whitening filter for an asynchronous time-varying CDMA system" IEEE TRANSACTIONS ON COMMUNICATIONS, vol. 44, no. 10, October 1996 (1996-10), pages 1355-1361, XP002221758 NEW YORK, US * page 1356, right-hand column, paragraph 3 * * page 1358, left-hand column, paragraph 4 * * page 1359, left-hand column, paragraph 2 *  -/-- | 1 | TECHNICAL FIELDS SEARCHED (Int.Cl.7)  H04L |

The present search report has been drawn up for all claims

| Place of search | Date of completion of the search | Examiner |
|---|---|---|
| THE HAGUE | 21 November 2002 | Scriven, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

European Patent Office

**EUROPEAN SEARCH REPORT**

Application Number

EP 02 25 5034

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| L | LUPAS, VERDÚ: "Near-far resistance of multiuser detectors in asynchronous channels" IEEE TRANSACTIONS ON COMMUNICATIONS, vol. 38, no. 4, April 1990 (1990-04), pages 496-508, XP002019257 NEW YORK, US completes disclosure of citation 3 | | |
| L | ALEXANDER, RASMUSSEN: "An efficient technique for deriving receiver filters in multiuser asynchronous DS/SSMA" IEEE INTERNATIONAL SYMPOSIUM ON PERSONAL, INDOOR AND MOBILE RADIO COMMUNICATIONS, 18 - 23 September 1994, pages 519-523, XP000607885 Amsterdam, NL completes disclosure of citation 3 | | |
|  |  |  | TECHNICAL FIELDS SEARCHED (Int.Cl.7) |

The present search report has been drawn up for all claims

| Place of search | Date of completion of the search | Examiner |
|---|---|---|
| THE HAGUE | 21 November 2002 | Scriven, P |

EP 1 383 289 A1

**ANNEX TO THE EUROPEAN SEARCH REPORT
ON EUROPEAN PATENT APPLICATION NO.**

EP 02 25 5034

21-11-2002

| Patent document cited in search report | Publication date | Patent family member(s) | Publication date |
|---|---|---|---|
| WO 0139448 A | 31-05-2001 | AU 7733300 A | 04-06-2001 |
| | | EP 1232617 A1 | 21-08-2002 |
| | | WO 0139448 A1 | 31-05-2001 |

EPO FORM P0459